# EUROPÄISCHE PATENTSCHRIFT

(11) **EP 2 604 963 B1**
(45) Veröffentlichungstag und Bekanntmachung des Hinweises auf die Patenterteilung: **20.03.2019**
(21) Anmeldenummer: 12008251.6
(22) Anmeldetag: 11.12.2012
(51) Int. Cl.: F28F 11/02, F22B 37/10, F16L 55/18, B21D 39/06, B23P 6/04, B23P 15/26, F22B 37/00, F16L 55/163, F16L 55/165

(54) **DAMPFERZEUGERHEIZROHRREPARATURMITTEL UND REPARATURVERFAHREN**
REPAIR MEANS FOR STEAM GENERATOR HEATING PIPE AND REPAIR METHOD
MOYEN DE RÉPARATION D'UN TUBE CHAUFFANT D'UN GÉNÉRATEUR DE VAPEUR ET PROCÉDÉ DE RÉPARATION

(30) Priorität: 16.12.2011 DE 102011121204
(43) Veröffentlichungstag der Anmeldung: 19.06.2013
(73) Patentinhaber: Westinghouse Electric Germany GmbH, 68167 Mannheim (DE)
(72) Erfinder: Jeanvoine, Nicolas, 68167 Mannheim (DE); Bienentreu, Robert, 68161 Mannheim (DE)
(74) Vertreter: Eickmeyer, Dietmar

(56) Entgegenhaltungen:
- DE-A1- 2 115 351
- DE-A1-102005 032 118
- US-A- 4 819 315
- US-A- 5 350 011
- US-A- 5 797 446

## Beschreibung

Die Erfindung betrifft ein Dampferzeugerheizrohrreparaturverfahren für ein in einen Dampferzeuger verbautes Dampferzeugerheizrohr mit einem defekten Rohrende, wobei eine Vielzahl an Dampferzeugerheizrohren an ihren jeweiligen Enden durch einen jeweiligen plattierten Rohrboden geführt und mit der Plattierung verschweißt sind, wobei verfahrensgemäß eine Dampferzeugerheizrohrreparaturhülse zu verwenden ist. Die Erfindung betrifft auch einen erfindungsgemäß reparierten Dampferzeuger.

Es ist allgemein bekannt, dass Dampferzeuger unter anderem in Kraftwerken zum Einsatz kommen, insbesondere auch in Kernkraftwerken. Dampferzeuger sind Wärmetauscher, welche im Betrieb in einem ersten Kreislauf von einem erhitzten primären Medium durchströmt werden, wobei die Wärme dann auf ein sekundäres Medium, insbesondere Wasser, übertragen wird, welches in einem zweiten, davon getrennten Kreislauf strömt. Nach Durchströmen des Dampferzeugers hat das Wasser dann seinen Aggregatzustand zu dampfförmig gewechselt und steht dann für den Antrieb einer Kraftwerksturbine zur Verfügung. Insbesondere bei Kernkraftwerken, wo das primäre Medium radioaktiv vorbelastet ist, ist auf eine strikte und absolut sichere Trennung zwischen erstem und zweitem Kreislauf im Dampferzeuger zu achten.

Dampferzeuger weisen im Wesentlichen einen zumeist zylindrischen Behälter auf, welcher an seinen axialen Enden einen jeweiligen plattierten Rohrboden aufweist, wobei der so gebildete Innenraum von einer Vielzahl von Dampferzeugerheizrohren durchquert ist, welche mit der Plattierung verbunden sind. So ist eine möglichst hohe Kontaktfläche für den Wärmeaustausch zwischen beiden Kühlkreisläufen gebildet. Dampferzeugerheizrohre werden mit der Plattierung der Unterkante des Rohrbodens dicht verschweißt. Wird diese Schweißnaht z. B. durch Fremdkörper beschädigt, ist die Dichtheit der Naht nicht mehr gewährleistet und es kann zu einer Leckage zwischen dem primären und dem sekundären Medium kommen. Die beschädigten Schweißnähte müssen repariert werden um die Trennung zwischen primären und sekundären Medien wieder herzustellen.

Dies geschieht seither entweder durch das Setzen von Schweißstopfen. Hier werden Dampferzeugerheizrohre, die eine Leckage an der Schweißnaht aufweisen, standardmäßig mithilfe von Schweißstopfen verschlossen. Zum Setzen von Schweißstopfen wird zuerst eine spezifische Fräskontur eingebracht. Der untere Flansch des Schweißstopfens dient als Zusatzmaterial und wird über einen WIG-Prozess (Wolfram Inert Gas) mit der Plattierung des Rohrbodens verschweißt. Die Naht dient sowohl als tragende Naht als auch als Dichtnaht.

Nachteilig hierbei ist, dass das verschlossene Dampferzeugerheizrohr nicht weiter zum Wärmtausch zwischen dem primären und sekundären Kreislauf beiträgt, wodurch es zu einer Verschlechterung des Wirkungsgrades des Kraftwerks kommt. Da der Dampferzeuger auch eine Sicherheitsfunktion im Falle von Stör- bzw. Unfällen hat, darf der Anteil von verschlossenen Rohren einen gewissen Wert nicht überschreiten, beispielsweise 10%. Ist der Anzahl von beschädigten Schweißnähten in einem Dampferzeuger sehr hoch, eignet sich das Setzen von Schweißstopfen als Reparaturmaßnahme nicht mehr.

Eine weitere Methode des Standes der Technik besteht im Nachschweißen. Durch das Wiederaufschmelzen des Materials können Fehler in der Naht wie Risse oder Poren geschlossen werden. Beim Nachschweißen können jedoch nur kleine und oberflächige Fehler behoben werden. Da kein Zusatzmaterial eingebracht wird kann ein Mangel an Schweißmaterial nicht kompensiert werden. Außerdem werden beim Nachschweißen die Verunreinigungen der ursprünglichen Schweißnaht wieder eingeschmolzen, wodurch die Qualität der neuen Naht beeinträchtigen werden kann. Das Nachschweißen von beschädigten Schweißnähten stellt daher keine zuverlässige und langfristige Reparaturmethode dar.

Weiterhin sind auch Reparaturverfahren mit Reparaturhülsen bekannt. So ist in der Patentschrift US 4592577 eine Reparaturhülse zum Einsetzen in ein defektes Rohrende eines Dampferzeugers offenbart. In der GB 1141239 ist ebenfalls eine Reparaturhülse zum Einsetzen in ein in ein defektes Rohrende eines Dampferzeugers offenbart, wobei ein nachfolgendes Aufweiten mittels eines Walzvorganges erfolgt, so dass danach eine dichte Verbindung zu dem Rohrende gegeben ist. *In der Patentschrift* DE 10 2005 032118 A1 *ist ein Rohrbündel-Wärmeübertrager mit verschleissbeständiger Rohrbodenauskleidung zum Einsatz in thermischen Crackanlagen offenbart, wobei der gaseintrittsseitige Rohrboden auf seiner einen Seite zumindest teilweise durch eine Materialschicht bedeckt ist, die auf der Stirnseite von einzelnen, nebeneinander angeordneten und an den Außenkanten aneinander stoßenden in die Rohrenden eingesteckten Hülsen besteht.*

Ausgehend von diesem Stand der Technik ist es Aufgabe der Erfindung ein Reparaturmittel beziehungsweise ein Reparaturverfahren bereitzustellen, welche einerseits das Verschließen der betroffenen Dampferzeugerheizrohre vermeidet und anderseits eine langfristige und zuverlässige Reparatur der beschädigten Rohrenden ermöglicht.

*Diese Aufgabe wird gelöst durch ein Dampferzeugerheizrohrreparaturverfahren gemäß Anspruch 1.*

Die Grundidee der Erfindung besteht in der Installation einer kurzen Rohrhülse beziehungsweise einer Dampferzeugerheizrohrreparaturhülse - auch Sleeve genannt - an das jeweils beschädigte Rohrende. Die Dampferzeugerheizrohrreparaturhülse wird durch eine mechanische Einwalzung in dem Dampferzeugerheizrohr fixiert und seine Unterkante wird in einer gefrästen Kontur mit der Plattierung des Rohrbodens verschweißt. Hierdurch ist einerseits der Weiterbetrieb des reparierten Dampferzeugerheizrohres gewährleistet, so dass der jeweilige Dampferzeuger auch , nach einer Vielzahl an Reparaturen problemlos weiterbetrieben werden kann. Andererseits ist hierdurch auch eine qualitativ hochwertige und damit nachhaltige Reparatur von defekten Rohrenden ermöglicht.

Die fehlerhafte Schweißnaht wird durch ein vorheriges konischen Anfräsen des betreffenden Rohrendes und das Einfräsen einer Senkung in die Plattierung um das defekte Rohrende restlos entfernt. Eventuelle Verunreinigungen welche zu dem Defekt der bisherigen Schweißnaht geführt haben könnten sind somit in vorteilhafter Weise eliminiert.

Die Unterkante der Dampferzeugerheizrohrreparaturhülse weist einen Flansch auf, welcher als Zusatzmaterial während des Schweißprozesses dient. Somit ist das manuelle Einbringen von Zusatzmaterial während des Schweißprozesses in vorteilhafter Weise vermieden. Das aufgeschmolzene Flanschmaterial verteilt sich in vorteilhafter Weise in die angefräste Senkung, so dass die Oberfläche der Plattierung nahezu glatt bleibt. Hierdurch ist neben der notwendigen hohen Qualität der Schweißnaht auch ein beschleunigter Reparaturprozess ermöglicht.

Der konische Bereich der Dampferzeugerheizrohrreparaturhülse ist exakt auf den konisch aufgefrästen Bereich des Rohrendes abgestimmt, so dass hierdurch eine exakte Passung ermöglicht ist. Dies lässt sich insbesondere durch Wahl eines passenden Fräswerkzeuges mit dem gewünschten konischen Winkel erreichen.

Der gerade Bereich der Hülse ist in seinem Außendurchmesser nicht größer als der jeweils minimale Innendurchmesser des defekten Rohrendes zu wählen, um so ein problemloses Einsetzen der Dampferzeugerheizrohrreparaturhülse in das aufgefräste Rohrende zu ermöglichen. In einem Einwalzprozess wird der gerade Bereich der eingesetzten Dampferzeugerheizrohrreparaturhülse dann aufgeweitet, so dass eine dichte und sichere Verbindung mit dem Rohrboden gegeben ist.

Die Dampferzeugerheizrohrreparaturhülse ermöglicht zudem eine besonders schnelle Reparatur von defekten Rohrenden. Dies ist insbesondere bei Dampferzeugern von nuklearen Anlagen aufgrund der für das Wartungspersonal vorherrschenden Strahlenbelastung von hoher Bedeutung. Diese wird dadurch in vorteilhafter Weise reduziert.

Gemäß einer bevorzugten Ausführungsform der Dampferzeugerheizrohrreparaturhülse ist die Dicke der Hülsenwandung im konischen Bereich gegenüber dem geraden Bereich erhöht. Der konische Bereich als wesentlicher und kritischer Teil des Reparaturbereiches wird durch eine solche erhöhte Wandungsdicke vorteilhaft verstärkt. Der konische Bereich ist nicht zwangsläufig für das Einwalzen vorgesehen, es ist im konischen Bereich nämlich aufgrund der Anpassung der konischen Fräsung hierauf eine ohnehin hohe Passgenauigkeit gegeben. Dennoch lässt sich durch Einwalzen im konischen Bereiche die Stabilität der Reparaturverbindung weiter steigern. Eine erhöhte Wandungsdicke stellt beim Einwalzen insoweit kein Problem dar, als das Wandungsmaterial aufgrund der hohen Passgenauigkeit der Hülse beim Einwalzen keiner größeren Deformation unterzogen wird. Eine erhöhte Wandungsdicke in diesem Bereich führt somit auch zu einer erhöhten Stabilität der zu schaffenden Verbindung der Dampferzeugerheizrohrreparaturhülse mit dem Rohrboden.
Im geraden bedarfsweise ebenfalls für das Einwalzen vorgesehenen Bereich kann die Dicke der Hülsenwandung dünner gewählt werden, weil das Dampferzeugerheizrohr in diesem hinteren Bereich insoweit keinen Schwachpunkt aufweist. In jedem Fall ist entweder der konische oder der gerade Bereich einzuwalzen, gegebenenfalls auch beide. Eine beispielhafte Dicke einer Hülsenwandung im konischen Bereich beträgt beispielsweise 1 - 2mm und im geraden Bereich <0,5mm, wobei dies in hohem Maße von den jeweiligen vorliegenden Randbedingungen und der Materialwahl der Dampferzeugerheizrohrreparaturhülse abhängt. Die Länge der Dampferzeugerheizrohrreparaturhülse ist so auszulegen, dass eine Installation auch in den Randpositionen des Dampferzeugers möglich ist, und beträgt beispielsweise 10 bis 15cm.

Gemäß einer besonders bevorzugten Ausgestaltung der Dampferzeugerheizrohrreparaturhülse entspricht die Länge des konischen Bereiches wenigstens dem eineinhalbfachen flanschseitigen inneren Hülsendurchmesser, welcher seinerseits beispielsweise 2,5cm beträgt, Durch einen solchen verhältnismäßig langen konischen Bereich ist es ermöglicht, eine stabile Reparaturverbindung alleine durch das Einwalzen des konischen Bereichs herzustellen. Durch die bereits im uneingewalzten Zustand hohe Passgenauigkeit der Dampferzeugerheizrohrreparaturhülse in die konische Bohrung lässt sich auch eine erhöhte Wandungsdicke problemlos einwalzen, wobei die daraus resultierende Verbindung von besonders hoher Qualität ist.

Gemäß einer weiteren Variante der Dampferzeugerheizrohrreparaturhülse ist die Dicke der Hülsenwandung im konischen Bereich zum geraden Bereich hin verringert. Somit ergibt sich im konischen Bereich summarisch eine etwa konstante Wandungsdicke von Dampferzeugerheizrohrreparaturhülse und konisch angefrästen Dampferzeugerheizrohr bei idealerweise konstantem Innendurchmesser der Reparaturverbindung.

Entsprechend einer weiteren Ausführungsform der Dampferzeugerheizrohrreparaturhülse ist zumindest an Teilbereichen der Außenoberflächefläche eine dünne raue Schicht vorgesehen. Diese Schicht, auch Microlock genannt, verbessert die Verankerung der Dampferzeugerheizrohrreparaturhülse im Dampferzeugerheizrohr und vermeidet eine Rotation der Reparaturhülse während ihrer Installation, insbesondere während des Einwalzens. Eine dadurch verursachte unwesentliche partielle Anhebung des Außendurchmessers der Reparaturhülse ist unerheblich, weil ohnehin ein geringes Spiel vorgesehen ist, um die Reparaturhülse problemlos in das aufgefräste Rohrende einzusetzen. Das Spiel wird dann durch das Einwalzen restlos eliminiert.

Gemäß einer besonders bevorzugten Ausführungsform ist die Dampferzeugerheizrohrreparaturhülse zumindest überwiegend aus dem Material Inconel 690® gefertigt. Dies zeichnet sich durch seine gute Korrosionsbeständigkeit und Verschweißbarkeit mit dem Plattierungsmaterial aus. Ebenfalls aufgrund dieser Eigenschaften und seinem guten Verhalten beim Einwalzen geeignet ist das Material Incoloy 800®. Hierdurch ist auch ein Einwalzen von relativ hohen Wandungsdicken im Bereich von 1mm und darüber ohne Rissbildung realisierbar.
Die Aufgabe wird auch gelöst durch ein Dampferzeugerheizrohrreparaturverfahren für ein in einen Dampferzeuger verbautes Dampferzeugerheizrohr mit einem defekten Rohrende, wobei eine Vielzahl an Dampferzeugerheizrohren an ihren jeweiligen Enden durch einen jeweiligen plattierten Rohrboden geführt und mit der Plattierung verschweißt sind, mit einer Dampferzeugerheizrohrreparaturhülse (50, 70), welche an ihrem einen Ende einen umlaufenden Flansch (36, 52, 72) aufweist, der in einen sich in Richtung des anderen Hülsenendes außen verjüngenden konischen Bereich (38, 54, 74, 102) übergeht, an welchen sich ein gerader Bereich (56, 76) anschließt, wobei die Dicke der Hülsenwandung im konischen Bereich (38, 54, 74, 102) gegenüber dem geraden Bereich (56, 76) erhöht ist, umfassend folgende Schritte:
- konisches Auffräsen des defekten Rohrendes und Einfräsen einer Senkung in die Plattierung um das defekte Rohrende,
- Einsetzen einer Dampferzeugerheizrohrreparaturhülse in das konisch aufgefräste defekte Rohrende, wobei die äußere Hülsenkontur zumindest im konischen Bereich auf die innere Kontur des aufgefrästen Rohrendes angepasst ist,
- Einwalzen der Dampferzeugerheizrohrreparaturhülse in ihrem geraden und / oder konischen Bereich,
- Verschweißen des Flanschbereiches der eingewalzten Dampferzeugerheizrohrreparaturhülse mit der Plattierung so dass eine Dichtnaht gebildet ist.
Das defekte Rohrende wird mithilfe eines konischen Fräsers gefräst. Der Fräser zentriert sich mit seiner Spitze im Dampferzeugerheizrohr. Der Durchmesser und der Winkel des konischen Bereichs des Fräsers sind so ausgelegt, dass die alte, defekte Schweißnaht komplett entfernt wird. Es entsteht eine neue Fräskontur mit einer Senkung für die Aufnahme und spätere Verschweißung des Dampferzeugerheizrohres in seinem Flanschbereich. Hierdurch ist eine hohe Passgenauigkeit des konischen Bereiches der Dampferzeugerheizrohrreparaturhülse mit dem konisch angefrästen Rohrende gegeben.
Abgesehen von den bereits für die Dampferzeugerheizrohrreparaturhülse genannten Vorteilen erweist sich dieses Verfahren neben einer notwendigerweise qualitativ sehr hochwertigen Verbindung zwischen Reparaturhülse und Rohrboden als sehr schnell, was insbesondere bezüglich einer minimierten Strahlenbelastung für das Reparaturpersonal von hohem Vorteil ist.

Entsprechend einer weiteren Ausgestaltungsform des erfindungsgemäßen Verfahrens erfolgt das Verschweißen unter Anwendung eines WIG-Verfahrens (Wolfram Inert Gas). Dies hat sich als besonders geeignet erwiesen und führt zu hochqualitativen Schweißnähten.

Gemäß einer weiteren Verfahrensvariante erfolgt das Verschweißen der eingesetzten Dampferzeugerheizrohrreparaturhülse bereits vor ihrem Einwalzen. Hierdurch wir eine Rotation der Reparaturhülse während des Einwalzens vermieden.

Entsprechend einer weiteren Verfahrensvariante erfolgt das Einwalzen der Dampferzeugerheizrohrreparaturhülse in mehreren Bearbeitungsschritten. Insbesondere bei einem axial nach hinten gestuften inneren Dampferzeugerheizrohrdurchmesser kann für jede Stufung gegebenenfalls ein unterschiedliches Einwalzwerkzeug notwendig sein, wodurch ein weiterer Bearbeitungsschritt bedingt ist.

Gemäß einer besonders bevorzugten Verfahrensvariante erfolgt dieses an einem defekten Ende eines Dampferzeugerheizrohres eines radioaktiv vorbelasteten Dampferzeugers einer nuklearen Anlage. Aufgrund der dort herrschenden höchsten Sicherheitsanforderungen ist die hohe Qualität und Langlebigkeit des verfahrensgemäß erzielten Reparaturergebnisses von besonders hoher Bedeutung. Zudem ist aufgrund des geringen Zeitbedarfs für das erfindungsgemäße Verfahren die Strahlenbelastung für das Reparaturpersonal in vorteilhafter Weise reduziert. Gegebenenfalls lässt sich die Reihenfolge der genannten Schritte auch in gewissen Grenzen tauschen, insoweit dies keinen Einfluss auf das Endergebnis hat.

Die erfindungsgemäßen Vorteile erstrecken sich auch auf einen Dampferzeuger, umfassend eine Vielzahl an Dampferzeugerheizrohren, welche an ihren beiden Enden durch einen jeweiligen plattierten Rohrboden geführt und mit der Plattierung verschweißt sind, wobei bei wenigstens einem Rohrende das erfindungsgemäße Reparaturverfahren angewandt worden ist. Aufgrund der Weiterverwendung eines erfindungsgemäß reparierten Dampferzeugerheizrohres sinkt der Wirkungsgrad eines auch vielfach reparierten Dampferzeugers gerade nicht und dieser kann aufgrund der qualitativ hochwertigen und langlebigen Reparatur in vorteilhafter Weise sicher über einen längeren Lebensdauerzeitraum betrieben werden.

Diese Vorteile erstrecken sich insbesondere auf einen radioaktiv vorbelasteten Dampferzeuger, dessen Austausch und Entsorgung bei verkürzter Lebensdauer besonders aufwändig ist.
Weitere vorteilhafte Ausgestaltungsmöglichkeiten sind den weiteren abhängigen Ansprüchen zu entnehmen.
Anhand der in den Zeichnungen dargestellten Ausführungsbeispiele sollen die Erfindung, weitere Ausführungsformen und weitere Vorteile näher beschrieben werden. Es zeigen
- Fig. 1: ein exemplarisches Dampferzeugerheizrohr in plattiertem Rohrboden,
- Fig. 2: ein exemplarisches repariertes Dampferzeugerheizrohr,
- Fig. 3: eine exemplarische erste Dampferzeugerheizrohrreparaturhülse,
- Fig. 4: eine exemplarische zweite Dampferzeugerheizrohrreparaturhülse,
- Fig. 5: einen exemplarischen Dampferzeuger und
- Fig. 6: ein exemplarisches zweites repariertes Dampferzeugerheizrohr.

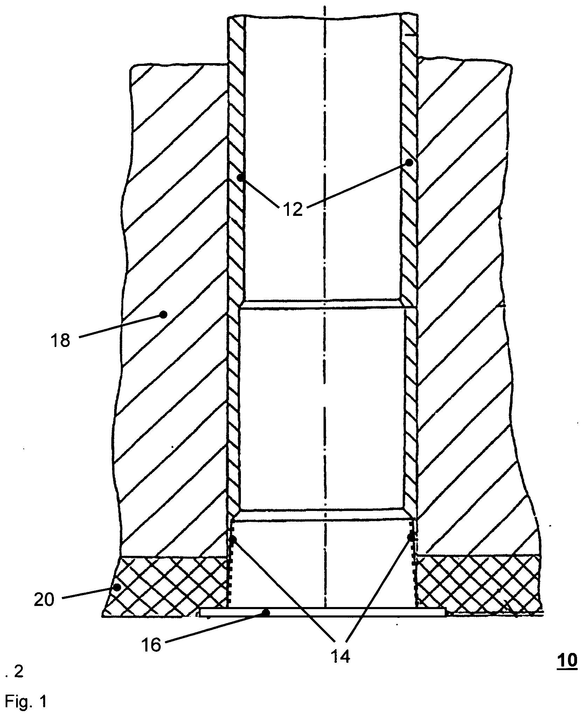

Fig. 1 zeigt ein exemplarisches Dampferzeugerheizrohr 12 in einem plattierten 20 Rohrboden 18 in einer Ansicht 10. Das Dampferzeugerheizrohr 12 ist ein seinem vorderen Endbereich konisch angefräst, wie mit der Bezugsnummer 14 angedeutet. Zudem ist an der Oberfläche der Plattierung 20 des Rohrbodens 18 eine Senkung 16 eingefräst. Hierdurch ist die ehemalige defekte - nicht dargestellte - Schweißnaht komplett entfernt und damit auch jegliche eventuelle Verunreinigungen, welche zu dem Defekt der Schweißnaht geführt haben könnten. Das Dampferzeugerheizrohr 12 ist in seinem hinteren Bereich mit gestuft abnehmendem Innendurchmesser beziehungsweise mit gestuft zunehmender Wandstärke gezeigt. Eine höhere Wandstärke ist bei Austritt des Dampferzeugerheizrohres aus dem Rohrboden notwendig, weil dann dessen stabilisierende Wirkung entfällt. Das dargestellte Dampferzeugerheizrohr 12 ist somit vorbereitet für das Einsetzen einer Dampferzeugerheizrohrreparaturhülse beziehungsweise eines Sleeves.

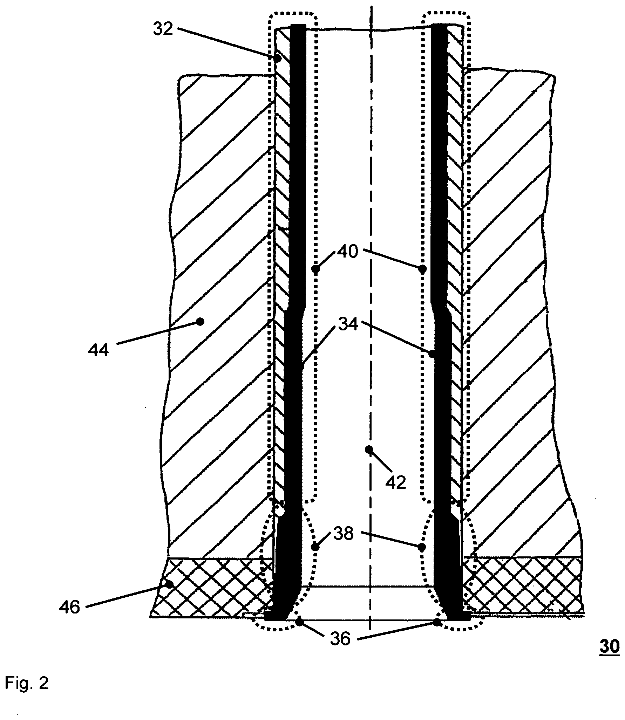

Fig. 2 zeigt ein exemplarisches repariertes Dampferzeugerheizrohr 32, welches durch einen Rohrboden 44 und eine darauf angeordnete Plattierung 46 geführt ist in einer Darstellung 30. In das entsprechend Fig.1 vorbereitete Rohrende ist nunmehr eine Dampferzeugerheizrohrreparaturhülse 34 eingesetzt, welche in ihrem oberen geraden Bereich 40 bereits eingewalzt, also in ihrem Durchmesser auf den jeweiligen Innendurchmesser des Rohrendes aufgeweitet wurde. Hierdurch ist eine hermetische Verbindung zwischen Dampferzeugerheizrohr 32 und Dampferzeugerheizrohrreparaturhülse 34 gewährleistet. Aufgrund der Stufung des Dampferzeugerheizrohres 32 sind mehrere Einwalzschritte notwendig gewesen. In einem konischen Bereich 38 sind die konische Außenform der Dampferzeugerheizrohrreparaturhülse 34 und die konische Innenform des angefrästen Rohrendes genau aufeinander abgestimmt, so dass sich hier eine passgenaue Verbindung ergibt. In einem Flanschbereich 36 liegt ein die Dampferzeugerheizrohrreparaturhülse 34 umgebender Flansch in einer eingefrästen Senkung, welche derart ausgestaltet ist, dass das Flanschmaterial bei Aufschmelzung im nachfolgenden Schweißprozess in etwa die Senkung auffüllt. Die Dampferzeugerheizrohrreparaturhülse 34 beziehungsweise das Dampferzeugerheizrohr 32 erstrecken sich rotationssymmetrisch um eine gedachte Mittelachse 42.

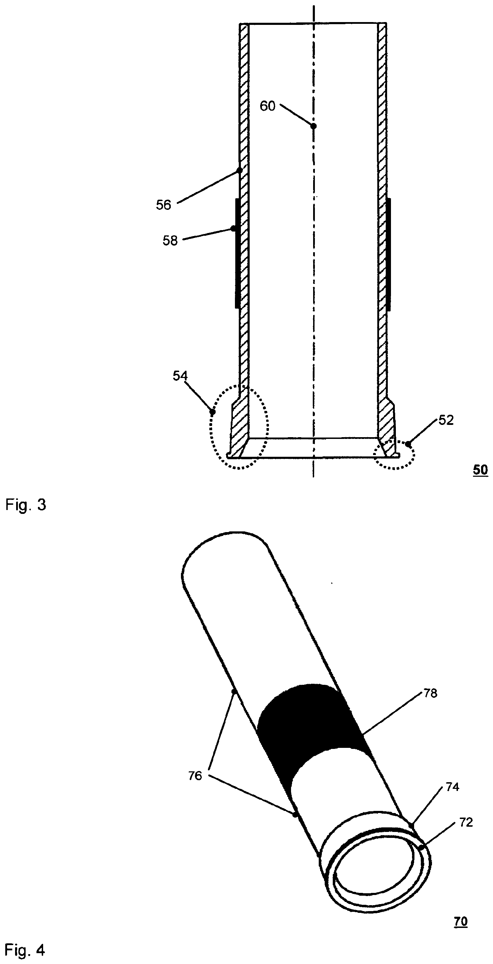

Fig. 3 zeigt eine exemplarische - noch nicht eingewalzte - erste Dampferzeugerheizrohrreparaturhülse 50 in einer Schnittansicht. Im unteren Flanschbereich 52 ist ein umlaufender Flansch vorgesehen, welcher beim späteren Schweißvorgang aufgeschmolzen und mit der Plattierung eines jeweiligen Rohrbodens verbunden wird. Ein konischer Bereich 54 ist mit einer erhöhten Wandstärke ausgeführt, wobei dieser Bereich nicht für ein Einwalzen vorgesehen ist. Ein sich anschließender gerader Bereich 56 ist für ein Einwalzen vorgesehen und weist daher einen Außendurchmesser auf, welcher unwesentlich kleiner ist als der Innendurchmesser eines jeweils zu reparierenden Dampferzeugerheizrohres. Im an der Außenfläche des geraden Bereiches 56 ist bereichsweise eine dünne raue Schicht 58, ein sogenannter Microlock, vorgesehen um beim späteren Einwalzen eine Rotation der Dampferzeugerheizrohrreparaturhülse 50 zu vermeiden. Diese erstreckt sich rotationssymmetrisch um eine gedachte Mittelachse 60 und ist vorzugsweise aus dem Material Inconel 690 gefertigt, was sich für diese Anwendung als besonders geeignet erwiesen hat.

Fig. 4 zeigt ebenfalls eine exemplarische zweite Dampferzeugerheizrohrreparaturhülse 70, jedoch in einer dreidimensionalen Ansicht. Am unteren Ende ist ein Flanschbereich 72 vorgesehen, an welchen sich in Richtung des anderen Hülsenendes ein konischer Bereich 74 und dann ein gerader Bereich 76 anschließen. Der gerade Bereich 76 ist an seiner Außenfläche von einer dünnen rauen Schicht 78 umgeben, welche eine Rotation der Dampferzeugerheizrohrreparaturhülse 70 beim Einwalzvorgang verhindert.

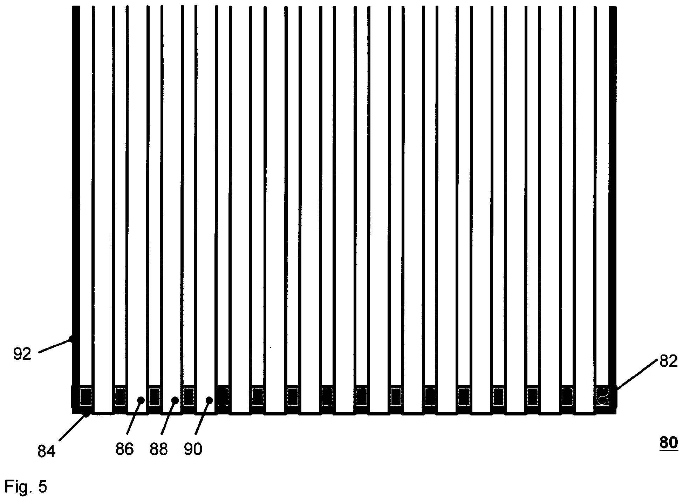

Fig. 5 zeigt einen exemplarischen Dampferzeuger 80 in einer schematischen Skizze. Wandungen 92 und ein plattierter 84 Rohrboden 82 bilden einen geschlossenen Innenraum, durch welchen mehrere Dampferzeugerheizrohre 86, 88, 90 geführt sind. Diese sind an ihren jeweiligen Enden durch Bohrungen in der Bodenplatte beziehungsweise der angrenzenden Plattierung 84 geführt und mit der Plattierung verschweißt. Im Betrieb des Dampferzeugers wird dessen Innenraum von einem ersten Medium durchströmt, wobei die Dampferzeugerheizrohre 86, 88, 90 von einem zweiten Medium durchströmt werden. Beide Medien sind komplett und sicher voneinander zu trennen, eine Vermischung ist in jedem Fall zu vermeiden. Im Reparaturfall wird das erfindungsgemäße Reparaturverfahren auf das jeweils defekte Rohrende angewandt.

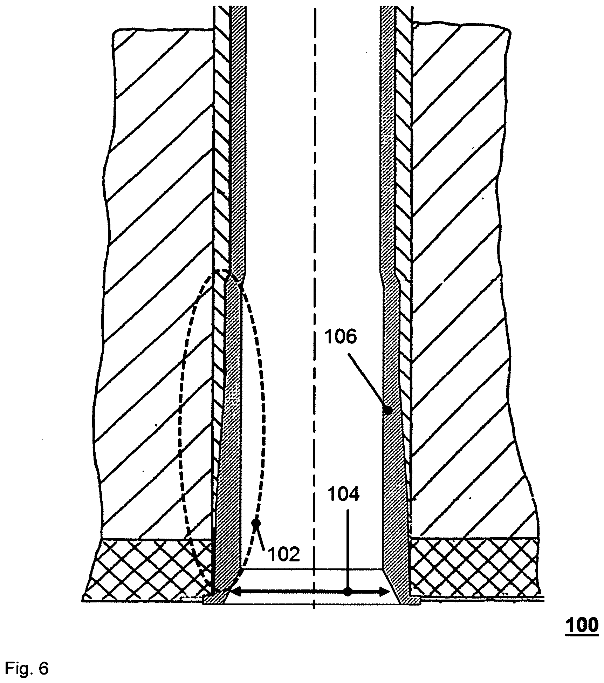

Fig. 6 zeigt ein exemplarisches zweites repariertes Dampferzeugerheizrohr in einer Schnittansicht 100. Eine Dampferzeugerheizrohrreparaturhülse 106 weist einen konischen Bereich 102 auf, welcher etwa dem Doppelten deren flanschseitigen Innendurchmessers 104 entspricht. Die Dampferzeugerheizrohrreparaturhülse 106 ist in ein aufgefrästes Dampferzeugerheizrohr eingesetzt und in ihrem konischen Bereich eingewalzt worden. Durch die verhältnismäßig lange Ausgestaltung des konischen Bereichs 102 ist ein Einwalzen im sich hinten anschließenden geraden Bereich nicht notwendig. Der Wandungsdicke der Dampferzeugerheizrohrreparaturhülse 106 nimmt nach hinten hin in dem Maße ab, in dem die Wandungsdicke des konisch angefrästen Dampferzeugerheizrohres zunimmt, so dass sich summarisch im konischen Bereich eine etwa konstante Wandungsdicke von Dampferzeugerheizrohrreparaturhülse und Dampferzeugerheizrohr ergibt.

### Bezugszeichenliste

- 10: exemplarisches Dampferzeugerheizrohr in plattiertem Rohrboden
- 12: Dampferzeugerheizrohr
- 14: konisch aufgefrästes Rohrende
- 16: eingefräste Senkung
- 18: Rohrboden
- 20: Plattierung
- 30: exemplarisches repariertes Dampferzeugerheizrohr
- 32: Dampferzeugerheizrohr
- 34: eingewalzte Dampferzeugerheizrohrreparaturhülse
- 36: Flanschbereich der Dampferzeugerheizrohrreparaturhülse
- 38: konischer Bereich der Dampferzeugerheizrohrreparaturhülse
- 40: gerader Bereich der Dampferzeugerheizrohrreparaturhülse
- 42: Mittelachse
- 44: Rohrboden
- 46: Plattierung
- 50: exemplarische erste Dampferzeugerheizrohrreparaturhülse
- 52: Flanschbereich der Dampferzeugerheizrohrreparaturhülse
- 54: konischer Bereich der Dampferzeugerheizrohrreparaturhülse
- 56: gerader Bereich der Dampferzeugerheizrohrreparaturhülse
- 58: dünne raue Schicht
- 60: Mittelachse
- 70: exemplarische zweite Dampferzeugerheizrohrreparaturhülse
- 72: Flanschbereich der Dampferzeugerheizrohrreparaturhülse
- 74: konischer Bereich der Dampferzeugerheizrohrreparaturhülse
- 76: gerader Bereich der Dampferzeugerheizrohrreparaturhülse
- 78: dünne raue Schicht
- 80: exemplarischer Dampferzeuger
- 82: unterer Rohrboden des Dampferzeugers
- 84: Plattierung des unteren Rohrbodens
- 86: erstes Dampferzeugerheizrohr
- 88: zweites Dampferzeugerheizrohr
- 90: drittes Dampferzeugerheizrohr
- 92: Wandung
- 100: exemplarisches zweites repariertes Dampferzeugerheizrohr
- 102: konischer Bereich der Dampferzeugerheizrohrreparaturhülse
- 104: flanschseitiger Innendurchmesser
- 106: exemplarische dritte Dampferzeugerheizrohrreparaturhülse

## Patentansprüche

1. Dampferzeugerheizrohrreparaturverfahren für ein in einen Dampferzeuger (80) verbautes Dampferzeugerheizrohr (12, 32, 86, 88, 90) mit einem defekten Rohrende, wobei eine Vielzahl an Dampferzeugerheizrohren (12, 32, 86, 88, 90) an ihren jeweiligen Enden durch einen jeweiligen plattierten Rohrboden (18, 44, 82) geführt und mit der Plattierung (20, 46, 84) verschweißt sind, *mit einer Dampferzeugerheizrohrreparaturhülse (50, 70), welche an ihrem einen Ende einen umlaufenden Flansch (36, 52, 72) aufweist, der in einen sich in Richtung des anderen Hülsenendes außen verjüngenden konischen Bereich (38, 54, 74, 102) übergeht, an welchen sich ein gerader Bereich (56, 76) anschließt, wobei die Dicke der Hülsenwandung im konischen Bereich (38, 54, 74, 102) gegenüber dem geraden Bereich (56, 76) erhöht ist,* umfassend folgende Schritte:
• konisches Auffräsen (14) des defekten Rohrendes und Einfräsen einer Senkung (16) in die Plattierung (20, 46, 84) um das defekte Rohrende,
• Einsetzen einer Dampferzeugerheizrohrreparaturhülse (50, 70) in das konisch aufgefräste (14) defekte Rohrende, wobei die äußere Hülsenkontur zumindest im konischen (38, 54, 74) Bereich auf die innere Kontur des aufgefrästen Rohrendes angepasst ist,
• Einwalzen der Dampferzeugerheizrohrreparaturhülse (50, 70) in ihrem geraden (56, 76) und/oder konischen (38, 54, 74, 102) Bereich,
• Verschweißen des Flanschbereiches (36, 52, 72) der eingewalzte Dampferzeugerheizrohrreparaturhülse (34) mit der Plattierung (20, 46, 84), so dass eine Dichtnaht gebildet ist.

2. Dampferzeugerheizrohrreparaturverfahren nach Anspruch *1,* **dadurch gekennzeichnet, dass** das Verschweißen unter Anwendung eines WIG-Verfahrens (Wolfram Inert Gas) erfolgt.

3. Dampferzeugerheizrohrreparaturverfahren nach einem der Ansprüche *1* oder *2,* **dadurch gekennzeichnet, dass** das Verschweißen der eingesetzten Dampferzeugerheizrohrreparaturhülse (50, 70) bereits vor ihrem Einwalzen erfolgt.

4. Dampferzeugerheizrohrreparaturverfahren nach einem der *vorherigen* Ansprüche, **dadurch gekennzeichnet, dass** *das* Einwalzen der Dampferzeugerheizrohrreparaturhülse (50, 70) in mehreren Bearbeitungsschritten erfolgt.

5. Dampferzeugerheizrohrreparaturverfahren nach einem der *vorherigen* Ansprüche, **dadurch gekennzeichnet, dass** dieses an einem radioaktiv vorbelastetem Dampferzeuger (80) einer nuklearen Anlage erfolgt.

6. *Dampferzeugerheizrohrreparaturverfahren nach einem der vorherigen* Ansprüche, **dadurch gekennzeichnet, dass** die Länge des konischen Bereiches (38, 54, 74, 102) *der Dampferzeugerheizrohrreparaturhülse (50, 70)* wenigstens dem eineinhalbfachen flanschseitigen inneren Hülsendurchmesser (104) entspricht.

7. *Dampferzeugerheizrohrreparaturverfahren nach einem der vorherigen* Ansprüche, **dadurch gekennzeichnet, dass** die Dicke der Hülsenwandung *der Dampferzeugerheizrohrreparaturhülse (50, 70)* im konischen Bereich (38, 54, 74, 102) zum geraden Bereich (56, 76) hin verringert ist.

8. *Dampferzeugerheizrohrreparaturverfahren nach einem der vorherigen* Ansprüche, **dadurch gekennzeichnet, dass** zumindest an Teilbereichen der Außenoberflächefläche *der Dampferzeugerheizrohrreparaturhülse (50, 70)* eine dünne raue Schicht (58, 78), vorgesehen ist.

9. *Dampferzeugerheizrohrreparaturverfahren nach einem der vorherigen* Ansprüche, nach einem der vorherigen Ansprüche, **dadurch gekennzeichnet, dass** *die Dampferzeugerheizrohrreparaturhülse (50, 70)* zumindest überwiegend aus dem Material Inconel 690® gefertigt ist.

10. *Dampferzeugerheizrohrreparaturverfahren nach einem der* Ansprüche 1 bis 8, **dadurch gekennzeichnet, dass** *die Dampferzeugerheizrohrreparaturhülse (50, 70)* zumindest überwiegend aus dem Material Incoloy 800® gefertigt ist.

11. Dampferzeuger (80), umfassend eine Vielzahl an Dampferzeugerheizrohren (12, 32, 86, 88, 90), welche an ihren beiden Enden durch einen jeweiligen plattierten Rohrboden (18, 44, 82) geführt und mit der Plattierung (20, 46, 84) verschweißt sind, **dadurch gekennzeichnet,**
**dass** bei wenigstens einem Rohrende das Reparaturverfahren nach einem der Ansprüche *1 bis 10* angewandt worden ist.

12. Dampferzeuger nach Anspruch *11,* **dadurch gekennzeichnet, dass** dieser radioaktiv vorbelastet ist.

## Claims

1. Steam generator heating tube repair method for a steam generator heating tube (12, 32, 86, 88, 90) which is installed in a steam generator (80) and has a defective tube end, wherein the ends of a multiplicity of steam generator heating tubes (12, 32, 86, 88, 90) are passed through respective clad tube plates (18, 44, 82) and welded to the cladding (20, 46, 84), having a steam generator heating tube repair sleeve (50, 70), which at one end has an encircling flange (36, 52, 72), which merges into a conical region (38, 54, 74, 102) that tapers on the outside in the direction of the other sleeve end and which is adjoined by a straight region (56, 76), wherein the thickness of the sleeve wall in the conical region (38, 54, 74, 102) is increased as compared with the straight region (56, 76), comprising the following steps:
• conical milling out (14) of the defective tube end and milling a depression (16) into the cladding (20, 46, 84) around the defective tube end,
• insertion of a steam generator heating tube repair sleeve (50, 70) into the conically milled-out (14) defective tube end, wherein the outer sleeve contour is matched, at least in the conical (38, 54, 74) region, to the inner contour of the milled-out tube end,
• rolling in the steam generator heating tube repair sleeve (50, 70) in the straight (56, 76) and/or conical (38, 54, 74, 102) region thereof,
• welding the flange region (36, 52, 72) of the rolled-in steam generator heating tube repair sleeve (34) to the cladding (20, 46, 84) to form a sealing seam.

2. Steam generator heating tube repair method according to Claim 1, **characterized in that** welding is carried out by a TIG welding method (Tungsten Inert Gas).

3. Steam generator heating tube repair method according to either of Claims 1 or 2, **characterized in that** welding of the inserted steam generator heating tube repair sleeve (50, 70) is carried out even before the latter is rolled in.

4. Steam generator heating tube repair method according to one of the preceding claims, **characterized in that** the steam generator heating tube repair sleeve (50, 70) is rolled in in a plurality of processing steps.

5. Steam generator heating tube repair method according to one of the preceding claims, **characterized in that** said method is carried out on a radioactively contaminated steam generator (80) of a nuclear plant.

6. Steam generator heating tube repair method according to one of the preceding claims, **characterized in that** the length of the conical region (38, 54, 74, 102) of the steam generator heating tube repair sleeve (50, 70) corresponds to at least one and a half times the sleeve inside diameter (104) at the flange end.

7. Steam generator heating tube repair method according to one of the preceding claims, **characterized in that** the thickness of the sleeve wall of the steam generator heating tube repair sleeve (50, 70) in the conical region (38, 54, 74, 102) is reduced towards the straight region (56, 76).

8. Steam generator heating tube repair method according to one of the preceding claims, **characterized in that** a thin rough layer (58, 78) is provided at least on partial areas of the outer surface of the steam generator heating tube repair sleeve (50, 70).

9. Steam generator heating tube repair method according to one of the preceding claims, **characterized in that** the steam generator heating tube repair sleeve (50, 70) is produced at least predominantly from the material Inconel 690®.

10. Steam generator heating tube repair method according to one of Claims 1 to 8, **characterized in that** the steam generator heating tube repair sleeve (50, 70) is produced at least predominantly from the material Incoloy 800®.

11. Steam generator (80), comprising a multiplicity of steam generator heating tubes (12, 32, 86, 88, 90), the two ends of which are each passed through respective clad tube plates (18, 44, 82) and welded to the cladding (20, 46, 84), **characterized in**
**that** the repair method according to one of Claims 1 to 10 has been employed on at least one tube end.

12. Steam generator according to Claim 11, **characterized in that** said generator is radioactively contaminated.

## Revendications

1. Procédé de réparation d'un tube chauffant d'un générateur de vapeur pour un tube chauffant de générateur de vapeur (12, 32, 86, 88, 90) monté dans un générateur de vapeur (80) avec une extrémité de tube défectueuse, dans lequel on guide une multiplicité de tubes chauffants de générateur de vapeur (12, 32, 86, 88, 90) à leurs extrémités respectives à travers une plaque à tubes plaquée respective (18, 44, 82) et on les soude au placage (20, 46, 84), avec une douille de réparation de tube chauffant de générateur de vapeur (50, 70), qui présente à une première extrémité une bride périphérique (36, 52, 72), qui se prolonge en une région conique (38, 54, 74, 102) se rétrécissant extérieurement en direction de l'autre extrémité de douille et à laquelle se raccorde une région droite (56, 76), dans lequel l'épaisseur de la paroi de douille est accrue dans la région conique (38, 54, 74, 102) par rapport à la région droite (56, 76), comprenant les étapes suivantes:
• fraisage conique (14) de l'extrémité de tube défectueuse et fraisage en creux d'un évidement (16) dans le placage (20, 46, 84) autour de l'extrémité de tube défectueuse,
• insertion d'une douille de réparation de tube chauffant de générateur de vapeur (50, 70) dans l'extrémité de tube défectueuse fraisée (14) en cône, dans lequel le contour extérieur de douille est adapté au moins dans la région conique (38, 54, 74) au contour intérieur de l'extrémité de tube fraisée,
• dudgeonnage de la douille de réparation de tube chauffant de générateur de vapeur (50, 70) dans sa région droite (56, 76) et/ou dans sa région conique (38, 54, 74, 102),
• soudage de la région de bride (36, 52, 72) de la douille de réparation de tube chauffant de générateur de vapeur dudgeonnée (34) au placage (20, 46, 84) de façon à former un cordon étanche.

2. Procédé de réparation d'un tube chauffant d'un générateur de vapeur selon la revendication 1, **caractérisé en ce que** l'on effectue le soudage en utilisant un procédé WIG (avec électrode de tungstène sous gaz protecteur).

3. Procédé de réparation d'un tube chauffant de générateur de vapeur selon une des revendications 1 et 2, **caractérisé en ce que** l'on effectue le soudage de la douille de réparation de tube chauffant de générateur de vapeur (50, 70) déjà avant son dudgeonnage.

4. Procédé de réparation d'un tube chauffant de générateur de vapeur selon l'une quelconque des revendications précédentes, **caractérisé en ce que** l'on effectue le dudgeonnage de la douille de réparation de tube chauffant de générateur de vapeur (50, 70) en plusieurs étapes de traitement.

5. Procédé de réparation d'un tube chauffant de générateur de vapeur selon l'une quelconque des revendications précédentes, **caractérisé en ce que** l'on effectue celui-ci sur un générateur de vapeur préchargé radioactivement (80) d'une installation nucléaire.

6. Procédé de réparation d'un tube chauffant de générateur de vapeur selon l'une quelconque des revendications précédentes, **caractérisé en ce que** la longueur de la région conique (38, 54, 74, 102) de la douille de réparation de tube chauffant de générateur de vapeur (50, 70) correspond au moins à une fois et demie le diamètre de douille intérieur côté bride (104) .

7. Procédé de réparation d'un tube chauffant de générateur de vapeur selon l'une quelconque des revendications précédentes, **caractérisé en ce que** l'épaisseur de la paroi de douille de la douille de réparation de tube chauffant de générateur de vapeur (50, 70) diminue dans la région conique (38, 54, 74, 102) jusqu'à la région droite (56, 76).

8. Procédé de réparation d'un tube chauffant de générateur de vapeur selon l'une quelconque des revendications précédentes, **caractérisé en ce qu'**il est prévu au moins sur des régions partielles de la face de la surface extérieure de la douille de réparation de tube chauffant de générateur de vapeur (50, 70) une mince couche rugueuse (58, 78).

9. Procédé de réparation d'un tube chauffant de générateur de vapeur selon l'une quelconque des revendications précédentes, **caractérisé en ce que** la douille de réparation de tube chauffant de générateur de vapeur (50, 70) est fabriquée au moins majoritairement en matériau Inconel 690®.

10. Procédé de réparation d'un tube chauffant de générateur de vapeur selon l'une quelconque des revendications 1 à 8, **caractérisé en ce que** la douille de réparation de tube chauffant de générateur de vapeur (50, 70) est fabriquée au moins majoritairement en matériau Incoloy 800®.

11. Générateur de vapeur (80), comprenant une multiplicité de tubes chauffants de générateur de vapeur (12, 32, 86, 88, 90), qui sont guidés à leurs deux extrémités à travers une plaque à tubes plaquée respective (18, 44, 82) et qui sont soudés au placage (20, 46, 84), **caractérisé en ce que** l'on a utilisé à au moins une extrémité de tube le procédé de réparation selon l'une quelconque des revendications 1 à 10.

12. Générateur de vapeur selon la revendication 11, **caractérisé en ce que** celui-ci est radioactivement préchargé.
